(19) Europäisches Patentamt
European Patent Office
Office européen des brevets

(11) Veröffentlichungsnummer: **0 126 186**
**B1**

(12) # EUROPÄISCHE PATENTSCHRIFT

(45) Veröffentlichungstag der Patentschrift: **06.04.88**

(51) Int. Cl.⁴: **C 08 K 3/34**, C 08 K 5/54, C 08 L 21/00, A 43 B 13/04

(21) Anmeldenummer: **83113015.8**

(22) Anmeldetag: **23.12.83**

(54) **Elastische Formmasse, Verfahren zum Herstellen und Verformen und Verwendung derselben.**

(30) Priorität: **17.02.83 DE 3305373**

(43) Veröffentlichungstag der Anmeldung: **28.11.84 Patentblatt 84/48**

(45) Bekanntmachung des Hinweises auf die Patenterteilung: **06.04.88 Patentblatt 88/14**

(84) Benannte Vertragsstaaten: **BE DE FR GB IT NL**

(56) Entgegenhaltungen: **GB-A-2 056 995**
**US-A-4 234 636**

**Die Akte enthält technische Angaben, die nach dem Eingang der Anmeldung eingereicht wurden und die nicht in dieser Patentschrift enthalten sind.**

(73) Patentinhaber: **Degussa Aktiengesellschaft, Weissfrauenstrasse 9, D-6000 Frankfurt am Main 1 (DE)**

(72) Erfinder: **Wolff, Siegfried, Dipl.- Chem., Weiherstrasse 28, D-5303 Bornheim- Merten (DE)**
Erfinder: **Golombeck, Paul, Wikinger Strasse 12A, D-5303 Bornheim 2 (DE)**

**EP 0 126 186 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung bezieht sich auf elastische Formmassen auf Basis von thermoplastischem Kautschuk, welche als Füllstoff mindestens einen silikatischen Füllstoff enthalten.

Unter thermoplastischem Kautschuk wird im Rahmen der vorliegenden Erfindung ein thermoplastisches, dem konventionellen Kautschuk analoges elastisches Verhalten aufweisendes Polymeres verstanden, welches auf bekannte Weise hergestellt wird aus den Monomeren Styrol und Butadien. Die thermoplastischen Kautschuke sind Block-Copolymeren, z. B. Drei-Block-Copolymere, die aus zwei Phasen bestehen. Diese copolymerisierten Elastomeren brauchen nicht vulkanisiert zu werden. Damit diese Copolymere das erwünschte gute elastische Verhalten zeigen, wird ihr gesamter Polystyrolanteil unter etwa 40 % gehalten.

Die beschriebenen thermoplastischen Kautschuke (abgekürzt TR) werden auch als Teleblock-Kautschuke bezeichnet.

Bekannt ist auch die Verwendung hochdisperser Kieselsäure-Füllstoffe wie z. B. die aus wässrigen Lösungen von Wasserglas durch Fällung mit Säure hergestellten feinteiligen, im wesentlichen aus Kieselsäure bestehendeh Füllstoffe in thermoplastischem Kautschuk. Der Kieselsäurezusatz verbessert das äußere Erscheinungsbild z. B. von Schuhsohlen aus thermoplastischem Kunststoff, in dem die Sohlen einen erwünschten modischen Mattierungseffekt erhalten. Weiterhin erhöht der Kieselsäurezusatz die Friktion bei der Herstellung der Mischungen, wodurch eine bessere und raschere Verteilung aller Komponenten der Mischung erzielt wird. Ferner wird die Aufnahme des vorteilhafterweise mitverwendeten Verarbeitungsöles durch den thermoplastischen Kautschuk verbessert bzw. beschleunigt, wodurch eine Verkürzung der Mischzeiten eintritt. Auch die Verklebbarkeit von z. B. Schuhsohlen wird verbessert, und die Trennfestigkeit erhöht. Weitere Vorteile der Mitverwendung von Kieselsäure-Füllstoffen können z. B. die Erhöhung der Zugfestigkeit, des Spanungswertes und der Shore-Härte des hergestellten Formkörpers sein.

Diesen Vorteilen stehen aber zwei Nachteile gegenüber. Die Mitverwendung der Kieselsäure als Füllstoff führt erstens zu einer füllungsgrad abhängigen Viskositätserhöhung, die Betriebsstörungen aufgrund der Überlastung voh Verarbeitungsmaschinen herbeiführen kann, und zweitens zu erhöhter Feuchtigkeitsaufnahme der hergestellten Waren, da die durch Fällung hergestellten Kieselsäure-Füllstoffe hygroskopisch sind und in Abhängigkeit von der relativen Luftfeuchtigkeit Feuchtigkeit aufhehmen können.

Die Kautschukmischung nimmt bereits nach Einarbeitung dieses Füllstoffes in den thermoplastischen Kautschuk Feuchtigkeit bzw. Wasser auf, wenn dies nicht aktiv verhindert wird. Gebrauchsartikel, die aus einer Kieselsäure-Füllstoff enthaltenden Mischung auf Basis von thermoplastischem Kautschuk hergestellt worden sind, könneh je nach Umgebungsbedingungen erhebliche Mengen an Feuchtigkeit aufnehmen und dadurch in ihrem Gebrauchswert stark herabgesetzt werden.

In der GB-A-2 056 995 werden Organosilan/Füllstoffmischungen beschrieben, die in vernetzbaren oder vulkanisierbaren Kautschukmischungen Verwendung finden.

Aus der US-A-4 234 636 sind Mischungen thermoplastischer Elastomere bekannt, die hohe Anteile an Weichmacherölen und hygroskopische Füllstoffe enthalten, damit man die Mischung durch Mikrowellen aufheizen und anschließend die so erhaltene Schmelze mit einem geringen Preßdruck (unter 200 psi) verformen kann. Die Verwendung von γ-Mercaptopropyltrimethoxysilan bietet keine Vorteile in diesem US-Dokument.

Es wurde nun gefunden, daß die beschriebenen Nachteile wie Viskositätserhöhung und Feuchtigkeitsaufnahme abgemildert werden können, und daß wegen der Verbesserung der physikalischen Eigenschaften die Verwendung größerer Füllstoffmengen in thermoplastischem Kautschuk ermöglicht wird.

Gegenstand der Erfindung ist eine elastische Formmasse bestehend aus einem, thermoplastischen Kautschuk oder einem Gemisch solcher Kautschuke, gegebenenfalls im Gemisch mit einem thermoplastischen Kunststoff und/oder einem synthetischen Harz, ferner mindestens einem silikatischen Füllstoff in Mengen von 1 bis 300 Gewichtsteilen bevorzugt 1 bis 150 Gewichtsteilen, und mindestens einem Stabilisierungsmittel aus der Gruppe der Alterungs-, Ermüdungs-, Oxidations-, Ozon- und Lichtschutzmittel in üblichen Mengen, welche dadurch gekennzeichnet ist, daß sie mindestens eine Organosiliciumverbindung, welche mindestens eine Alkoxysilylgruppe aufweist, in Mengen von 0,1 bis 25 Gewichtsteilen, bevorzugt 0,1 - 15 Gewichtsteilen enthält, wobei alle genannten Gewichtsteile bezogen sind auf 100 Gewichtsteile thermoplastischen Kautschuk, oder daß die Formmasse die genannte Organosiliciumverbindung bzw. die genannten Organosiliciumverbindungen in einer Abmischung mit dem silikatischen Füllstoff enthält, oder daß die Formmasse die genannte Organosiliciumverbindung bzw. die genannten Organosiliciumverbindungen in mit dem silikatischen Füllstoff chemisch gebundener Form in gleichmäßiger Verteilung enthält.

Gegenstand der Erfindung ist weiter eine elastische Formmasse, die dadurch gekennzeichnet ist, daß sie als Organosiliciumverbindungen mindestens ein Organosilan der Formeln

(I) $X_p\text{-}C_mH_{2m+1-p}\text{-}SiR_n^1(OR)_{3-n}$,

in der bedeuten X Chlor oder Brom,
p = 1 oder 2,
m = 1 bis 5,
$R^1$ eine $C_1$- bis $C_5$-Alkylgruppe, eine $C_5$- bis $C_6$-Cycloalkylgruppe oder die Phenylgruppe,
R eine $C_1$- bis $C_5$-Alkylgruppe, eine $C_5$- bis $C_6$-Cycloalkylgruppe, die Methoxyäthylgruppe, die

Äthoxyäthylgruppe, Phenylgruppe oder die Benzylgruppe und
n = 0;1 oder 2, einschließlich eines Hydrolysats und/oder eines Kondensats,

(II) $[R_n^2 (R^3O)_{3-n}Si\text{-}(Alk)_q(Ar)_r\text{-}]_2S_x$ oder

(III) $R_n^2(R^3O)_{3-n}Si\text{-}Alk\text{-}SH$,

in denen bedeuten
Ar einen Arylenrest mit 6 bis 12 C-Atomen
r=0 oder 1,
$R^2$ eine $C_1$- bis $C_5$-Alkylgruppe, die Phenylgruppe,
$R^3$ eine $C_1$- bis $C_5$-Alkylgruppe, die Methoxyäthylgruppe, die Äthoxyäthylgruppe, Phenylgruppe oder die Benzylgruppe, n = 0; 1 oder 2, Alk einen zweiwertigen, geraden oder verzweigten Kohlenwasserstoffrest mit 1 bis 6 Kohlenstoffatomen und
x eine Zahl von 2,0 bis 8,0 vorzugsweise bis 6,0 einschließlich ihrer Hydrolysate und/oder ihrer Kondensate,
q=0 oder 1 und als silikatische Füllstoffe mindestens einen durch Füllung aus wassrigem Medium gewonnenen Füllstoff, der im wesentlichen aus Kieselsäure mit spezifischen Oberflächen, nach DIN 66 132 gemessen, zwischen 30 und 250 $m^2/g$ besteht oder die Formmasse enthält ein Gemisch aus bzw. ein chemisches Umsetzungsprodukt aus mindestens einem der genannten Organosilane und mindestens einem der genannten Kieselsäure-Füllstoffe oder Ruß anstelle der Einzelbestandteile des Gemischs bzw. des Umsetzungsproduktes oder anstelle eines Teils dieser Einzelbestandteile.

Zu den Halogenalkylalkoxy- und Phenoxysilanen der Formel I zählen insbesondere:
Chlormethyltrimethoxysilan, Chlormethyltriäthoxysilan, Brommethyltriäthoxysilan, Dichlormethyltriäthoxysilan, 1-Chlor-1-methyl-methyl-trimethoxysilan, 2-Chloräthyltrimethoxysilan. 2-Bromäthyltrimethoxysilan, 2-Dibromäthyltrimethoxysilan, 3-Brompropyltrimethoxysilan, 3-Chlorpropyltrimethoxysilan, 3-Dichlorpropyltrimethoxysilan, 3-Chlorpropyltiäthoxysilan, 3-Brompropyltriäthoxysilan, propyltriäthoxysilan, 3-Dibrompropyltriäthoxysilan, 2-Brom-1-methyl-äthyltripropoxysilan, 2-Dichloräthyl-tri-n-butoxysilan, 2-Chloräthyl-tri-2'-methyl-propoxysilan, 3-Brompropyl-trit-butoxysilan, 3-Dibrom-Propyltriisopropoxysilan, 3-Brompropyltri-n-pentoxy-silan, 2-Chloräthyl-tri-2'-äthyl-äthoxysilan, 2-Brom-2-methyl-äthyldimethoxyäthoxysilan, 3-Dichlorpropyl-methoxyäthoxypropoxysilan, 3-Chlorpropyldimethoxymethylsilan, 3-Brompropyldiäthoxyäthylsilan, 3-Chlorpropyläthoxydiäthylsilan, 3-Brompropyl-tris-(1'-methoxyäthoxy)-silan, 3-Chlorpropyldiäthoxy-phenylsilan, 3-Dichlorpropyldimethoxycyclopentylsilan, 3-Brompropyl-di-n-propoxy-cyclohexylsilan, 3-Chlorpropyldicyclohexoxycyclohexylsilan,
3-Chlorpropyläthoxyphenyloxyäthylsilan, 3-Dibrompropylbenzyloxyäthoxyäthylsilan, 4-Chlor-n-butyltrimethoxysilan, 4-Brombutyltrimethoxysilan, 3-Chlor-2-methyl-propyltrimethoxysilan,
3-Chlor-2-äthyl-propyldiäthoxymethylsilan, 3-Brom-3-äthyl-propyldimethoxymethylsilan, 3-Chlor-2-methyl-propyldimethoxyphenylsilan, 5-Chlor-n-pentyltriäthoxysilan,
4-Brom-2-methyl-butyltriäthoxysilan, 2-Chlor-2-methyl-äthyl-tripentoxysilan, 2-Dichlor-2-methyl-äthyltributyloxysilan, 3-Brompropyltriphenoxysilan. 3-Chlorpropyltribenzyloxysilan und 3-Dibrompropyltricyclopentoxysilan. Vorgezogen werden die Halogenalkyloxysilane mit einem Halogenatom (p = 1 in der Formel I) und mit drei Alkoxysilylgruppen.

Zu den oligosulfidischen Silanen der Formel II, die an sich bekannt sind, beispielsweise aus der US-PS-3 873 489, und die nach den Verfahren, die in der DE-PS-25 42 534 bzw. DE-AS-25 58 191 beschrieben sind, hergestellt werden können, rechnen insbesondere die Bis-(trialkoxysilyl-alkyl)-oligosulfide. Von diesen Trialkoxysilanen und deren Gemischen der allgemeinen Formel II werden wiederum bevorzugt die Bis-(3-trimethoxy-, -(3-triäthoxy- und -(3-tripropoxysilyl-propyl)-polysulfide und zwar die Di-, Tri- und Tetrasulfide, insbesondere die Triäthoxyverbindungen mit 2, 3 oder 4 Schwefelatomen und deren Gemische. Vorzugsweise werden diese oligosulfidischen Silane in Mengen von 1 bis 15 Gewichtsteilen je 100 Gewichtsteile silikatischen Füllstoff in den neuen thermoplastischen Kautschuk-Mischungen eingesetzt. Vorteilhaft einzusetzen sind vor allem auch

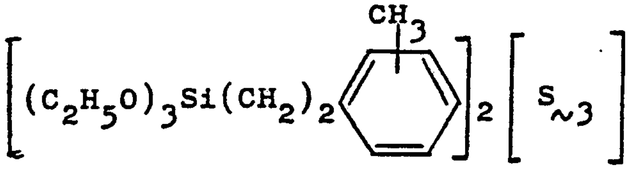 und

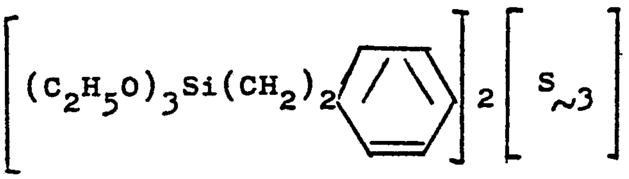 und Methoxyanaloge

Folgende Mercaptosilane der Formel III werden vorzugsweise eingesetzt:
Mercaptomethyltrimethoxysilan, Mercaptomethyltriäthoxysilan, Mercaptomethyltri-i-propoxysilan, 2-Mercaptoäthyltrimethoxysilan, 2-Mercaptoäthyltriäthoxysilan, 2-Mercaptoäthyltri-i-propoxysilan, 2-Mercaptoäthyltributoxysilan, 2-Mercaptoäthyltri-n-propoxysilan, 2-Mercaptoäthyldiäthoxymethylsilan, 2-Mercapto-2-methyläthyl-triäthoxysilan, 2-Mercapto-1-methyläthyl-trimethoxysilan, 3-Mercaptopropyltrimethoxysilan, 3-Mercaptopropyltriäthoxysilan, 3-Mercaptopropyltri-i-propoxysilan, 3-Mercaptopropyl-tri-n-propoxysilan, 3-Mercaptopropyltributoxysilan, 3-Mercaptopropyltris-(methoxyäthoxy)-silan, 4-Mercaptobutyltriäthoxysilan, 5-Mercaptopentyltrimethoxysilan, 5-Mercaptopentyltri-i-propoxysilan, 3-Mercaptopropyldiäthoxyäthylsilan, 3-Mercaptopropyldipropoxypropylsilan, 6-Mercaptohexyltriäthoxysilan.

Anstelle der aufgezählten Organosiliciumverbindungen, insbesondere derjenigen der Formeln I, II und III können auch deren Hydrolysate und Kondensate treten, ggf. teilweise, womit Gemische aus den nicht hydrolysierten bzw. nicht kondensierten Silanen mit den hydrolysierten und bzw. oder kondensierten Silanen gemeint sind. Diese Hydrolyse bzw. Kondensierung braucht nicht vollständig zu sein, so daß auch Teilhydrolysate bzw. Teilkondensate zum Einsatz gemäß der Erfindung kommen können. Diese Teilhydrolysate bzw. Teilkondensate können dann hergestellt werden, wenn die Silane mehrere Oxysilylgruppen im Molekül besitzen.

Zu den Kondensaten zählen insbesondere die Kondensate der Silane mit Alkoholen, vorzugsweise zweiwertigen Alkoholen wie z. B. Äthylenglykol, Propylenglykol, Trimethylenglykol, Trimethyläthylenglykol, Tetramethylenglykol, Pentamethylenglykol usw., Diäthylenglykol, Butandiole wie 1,4-Butandiol, Dipropylenglykol, Polyäthylenglykole und Glycid (2,3-Epoxypropanol-1).

Die Hydrolyse wie auch die Kondensationsreaktionen werden nach an sich bekannten Verfahren ausgeführt. Sie führen zu höher molekularen Verbindungen mit z. B. höheren Siedepunkten usw., was für die Herstellung der erfindungsgemässen Formmassen von Vorteil sein kann.

Erfindungsgemäß einsetzbar einzeln oder im Gemisch sind weiterhin Organosilane der Formel

(IV) $A\text{-}SiR_n^4(OR^3)_{3-n}$,

in der
n und $R^3$ die oben angeführten Bedeutungen haben
$R^4$ eine $C_1$- bis $C_5$-Alkylgruppe und
A eine Azido- oder Thiocyanato-, Amino- oder Epoxyalkylgruppe mit einem geraden oder verzweigten $C_1$-$C_6$-Kohlenwasserstoffrest als Alkyl, oder eine Vinylgruppe oder ein Aralkylrest ist, oder das Phenyläthyldiäthoxysilan.

Besonders geeignet sind Thiocyanatoalkylalkoxysilane wie das 3-Thiocyanatopropyltrimethoxy-, -triäthoxytri-n-propoxy-. -tri-isopropoxysilan und die entsprechenden 2-Thiocyanatoäthylalkoxysilane, ferner Vinylalkoxysilane wie:
Vinyltrimethoxysilan, Vinyltriäthoxysilan, Vinyltripropoxysilan, Vinyl-tris-i-propoxysilan, Vinyl-tris-(2-methoxyäthoxy)-silan, Vinylmethyldimethoxysilan, Vinyläthyldiäthoxysilan, Vinylmethyl-di-(2äthoxy-äthoxy)-silan, Vinyldiäthyläthoxysilan, Vinyldimethylmethoxysilan, Vinyldiäthyl-2-methoxyäthoxy-silan, Vinylphenyldiäthoxysilan, Vinyldiphenylmethoxysilan, wobei Monovinylsilane bevorzugt eingesetzt werden.

Von den Azidosilanen werden bevorzugt Azidomethyltriäthoxysilan, 2-Azidoäthyltriäthoxysilan, 3-Azidopropyltriäthoxysilan und die entsprechenden Methoxyanalogen eingesetzt.

Sehr geeignet sind auch silanisierte polybutadiene. Darunter sind Polybutadiene unterschiedlichen Molekulargewichts und Vinylgruppengehalts zu verstehen, der Doppelbindungen zumindest teilweise durch Umsetzung mit reaktiven Organosilanen abgesättigt worden sind.

Zu den erfindungsgemäß eingesetzten thermoplastischen Kautschuksorten zählen Block-Copolymere der Struktur Polystyrol-Polybutadien, insbesondere Dreiblock Copolymere.

Die nach der Erfindung obligatorisch mitzuverwendenden Füllstoffe, einschließlich Gemischen von zwei oder mehr Füllstoffen, sind an sich in der Kautschuk-Technologie bekannte Füllstoffe. Dabei ist der Begriff "silikatischer Füllstoff" ein weitgefaßter und bezieht sich auf Füllstoffe, die aus Silikaten bestehen, Silikate enthalten und bzw. oder Silikate im weitesten Sinne chemisch gebunden enthalten.

Die beanspruchte Gruppe der silikatischen Füllstoffe, die erfindungswesentlich sind, besitzen an den Teilchenoberflächen Silanolgruppen, die in der Lage sind, chemisch mit den Alkoxysilylgruppen und dergleichen Oxygruppen wie z. B. auch der Phenoxygruppe der Organosiliciumverbindungen unter Bildung von -Si-O-Si-Brückengliedern zu reagieren. Insbesondere zählen zu den silikatischen Füllstoffen:

Hochdisperse Kieselsäure-Füllstoffe, im wesentlichen aus Siliciumdioxid bestehend, mit spezifischen Oberflächen im Bereich von etwa 5 bis 1000, vorzugsweise 20 bis 400 $m^2/g$ (nach der

Stickstoffadsorptionsmethode, die in der deutschen Industrie-Norm DIN 66 132 beschrieben ist, gemessen) und mit Primärteilchengrössen im Bereich von etwa 10 bis 400 nm, die hergestellt werden können z. B. durch Ausfällung in wässrigem Medium, durch hydro-thermalen Aufschluss, durch hydrolytische und bzw. oder oxidative Hochtemperaturumsetzung, auch Flammenhydrolyse genannt, von flüchtigen Siliciumhalogeniden (pyrogene Kieselsäure) oder durch ein Lichtbogenverfahren. Diese kieselsäurehaltigen Füllstoffe können ggf. auch als Mischoxid oder Oxidgemisch mit den Oxiden der Metalle Aluminium, Magnesium, Calcium, Barium, Zink und/oder Titan vorliegen.

Synthetische Silikate, z. B. Aluminiumsilikate oder Erdalkalisilikate wie Magnesium- oder Calciumsilikat, mit spezifischen Oberflächen von etwa 20 bis 400 $m^2/g$ und Primärteilchengrössen von etwa 10 bis 400 nm.

Natürliche Silikate, z. B. Kaoline, Tone, Kieselkreise und Asbeste sowie natürliche Kieselsäuren wie beispielsweise Quarz z. B. als feinpulverisierte Quarzsande und Kieselgur (Diatomeenerde).

Glasfasern und Glasfasererzeugnisse wie Matten, Stränge, Gewebe, Gelege und dergleichen sowie Mikroglasurkugeln.

Die genannten silikatischen Füllstoffe werden in Mengen von 1 bis 300 Gewichtsteilen vorzugsweise in Mengen von etwa 5 bis zu etwa 150 Gewichtsteilen, bezogen auf 100 Gewichtsteile des thermoplastischen Kautschuks, eingesetzt.

Als Füllstoffgemische können genannt werden: Kieselsäurefüllstoffe unterschiedlicher Provenienz, Kieselsäure/Kaolin oder Kieselsäure/Glasfasern/Asbest sowie Verschnitte der silikathaltigen Verstärkerfüllstoffe mit den bekannten Gummirußen wie z. B. Kieselsäure/HAF-Ruß oder Kieselsäure/Glasfasercord/ISAF-Ruß.

Typische Beispiele der erfindungsgemäß verwendbaren silikatischen Füllstoffe sind z. B. die von der DEGUSSA Aktiengesellschaft hergestellten und vertriebenen Kieselsäuren bzw. Silikate mit den Handelsnamen AEROSIL®, ULTRASIL®, SILTEG®, DUROSIL®, EXTRUSIL®, CALSIL®.

Erfindungsgemäß werden als silikatische Füllstoffe die genannten hochdispersen oder aktiven Kieselsäure-Füllstoffe vorgezogen, insbesondere die gefällten Kieselsäuren und zwar vorzugsweise in Mengen von 5 bis 150 Gewichtsteilen, bezogen auf 100 Gewichtsteile thermoplastischen Kautschuk.

Eine vorteilhafte Variante besteht darin, die Organosiliciumverbindung(en) mit den(m) silikatischen Füllstoff(en) bei erhöhter Temperatur zur Reaktion zu bringen, wobei vermutlich die Silanolgruppen des silikatischen Füllstoffs mit der(n) Oxysilylgruppe(n) reagieren. Diese silanisierten silikatischen Füllstoffe können dann mit den übrigen Mischungsbestandteilen zur Formmasse verarbeitet werden.

Nach einer weiteren mit Vorteilen verbundenen Variante werden die Organosiliciumverbindungen bei normaler Temperatur mit dem(n) silikatischen Füllstoff(en) vermischt und das entstandene Vorgemisch zur Herstellung der Formmassen eingesetzt. Die Herstellung des genannten Vorgemischs kann mit intensiv wirkenden Pulvermischern so vorgenommen werden, beispielsweise gemäß der DE-PS-27 47 277 daß ein lagerfähiges, nicht staubendes Vorgemisch, welches besonders gut und gleichmäßig in der Kautschukmischung eingearbeitet werden kann, entsteht. Bei Verwendung dieses Vorgemischs kann es von Vorteil sein, die notwendige Menge an Organosiliciumverbindung(en) nicht mit der ganzen notwendigen Menge an Füllstoff vorweg zu vermischen, sondern nur mit einem Anteil des notwendigen Füllstoffs. So sind vorteilhafterweise derartige hinsichtlich der Organosiliciumverbindung(en) angereicherte Vorgemische verwendbar wie beispielsweise dem Gewicht nach 50 : 50 Gemische von Organosiliciumverbindung(en) und Füllstoff(en).

Gewünschtenfalls, z. B. zum Zwecke der Einfärbung, kann in der erfindungsgemäßen Formmasse auch Ruß zugegen sein. Er kann im allgemeinen in Mengen zwischen 0,1 bis 50 Gewichtsteilen je 100 Gewichtsteile Kautschuk, gegebenenfalls in noch geringen Mengen, in die Mischung eingearbeitet werden. Hier kommen alle Rußarten, insbesondere die in der Kautschukindustrie üblicherweise verwendeten Rußarten in Frage. Beispielsweise seien HAF-Ruße und insbesondere ISAF-Ruße genannt. Im Falle der Mitverwendung von Ruß oder Rußen in der Formmasse kann die Menge der Kieselsäure-Füllstoffe abgesenkt werden.

Die gegebenenfalls ebenfalls miteinzusetzenden Stabilisierungsmittel, ausgewählt aus der Gruppe der Alterungs-, Ermüdungs-, Oxidations- Ozon- und Lichtschutzmittel, sind in der kautschukverarbeitenden Industrie bekannte Stoffe, und sie werden in üblichen Mengen, d.h. in Mengen von 0,1 bis 10 Gewichtsteilen je 100 Gewichtsteile thermoplastischen Kautschuk, eingesetzt.

Gegebenenfalls können den Formmassen weitere in der Kautschukverarbeitenden Industrie bekannte Zusatzmittel in üblichen Mengen hinzugefügt werden wie z. B. Pigmente, Farbstoffe, Wachse, weitere Füllstoffe wie Kreide, Aluminiumoxide und bekannte Mittel zur Haftverbesserung zwischen Füllstoff bzw. Einlagen wie z. B. Stahlcord und der Kautschukmatrix.

Die bei einigen Bestandteilen der Formmassen als untere Mengengrenze angegebene Zahl Null bedeutet im Rahmen der vorliegenden Erfindung, daß dieser Bestandteil in der Formmasse nicht vorhanden sein muß, aber kann. Ist dieser Bestandteil in der Formmasse vorhanden, so liegt die untere Mengengrenze in der Praxis bei etwa 0,5 Gewichtsteilen, gegebenenfalls noch darunter, wiederum bezogen auf 100 Gewichtsteile Kautschuk.

Die Formmassen werden auf übliche Weise und auf bekannten Mischungsvorrichtungen hergestellt. Vorzugsweise wird in zwei getrennten Stufen gemischt. In der ersten Stufe werden z. B. in einem schnell laufenden Innenmischer in einer Zeit von 2 bis 30 Minuten bei einer Tourenzahl von 20 bis 120 pro Minute und einer anfänglichen Temperatur von 90 bis 110°C der thermoplastische Kautschuk mit dem silikatischen Füllstoff (in einer oder mehreren gleichen Positionen nacheinander) und dem Organosilan gemischt und, in der zweiten Stufe die entstandene Masse auf Mischwalzen bei einer Anfangstemperatur (der Walzen) von 90 bis 110°C

innerhalb einer Zeit von 1 bis 10 Minuten zu einem gleichmäßigen Walzfell verarbeitet, wobei das Walzfell drei- bis fünfmal mit einem Messer ein- oder durchgeschnitten und gestürzt wird. Schließlich wird, gegebenenfalls nach Abkühlung, das Walzfell mit einer Dicke von 2 bis 20 mm der Mischwalzenvorrichtung entnommen. Gegebenenfalls wird das Walzfell zu Granulaten oder dergleichen übliche Formstücke zerkleinert, und diese werden bei Temperaturen zwischen 60 und 300°C mit Hilfe üblicher Vorrichtungen zu Formkörpern verarbeitet.

Die erfindungsgemäßen Formmassen werden zur Herstellung von Schuhsohlen, Sohlenplatten oder anderen Formkörpern deren Formgebung durch Injizieren der Formmasse in eine Metall oder Kunststoff-Form oder durch Passieren der Formmasse durch eine formgebende Düse, wie im Falle von Profilen, Schläuchen, Bändern oder Fäden erfolgt, verwendet.

**Beispiele**

Die folgenden Beispiele sollen die Erfindung erläutern.

**Beispielgruppe A**

In einer Grundmischung aus 100 Gewichtsteilen eines thermoplastischen Kautschuks auf Basis eines Styrol-Butadien-Styrol-Block Copolymeren (Cariflex® TR-4113 der Shell) und 50 Gewichtsteilen eines durch Fällung hergestellten Kieselsäure-Füllstoffs mit einer spezifischen Oberfläche (DIN 66132) von 175 $m^2/g$ und einer mittleren Primärteilchengröße von 18 Mikrometer (µm) (Ultrasil® VN 3 der Degussa AG) wurden jeweils diverse Organosiliziumverbindung in der angegebenen Menge eingearbeitet.

a) 7,5 Gewichtsteile Bis-(3-triäthoxysilylpropyl)-tetrasulfan
b) 6,6 Gewichtsteile Bis-(3-triäthoxysilylpropyl)-disulfan
c) 6,2 Gewichtsteile 3-Thiocyanatopropyltrimethoxysilan
d) 7,8 Gewichtsteile Vinyl -tris- (2-methoxyäthoxy)-silan
e) 6,7 Gewichtsteile 3-Chlorpropyltriäthoxysilan
f) 5,5 Gewichtsteile 3-Mercaptopropyltrimethoxysilan
g) 7,5 Gewichtsteile Phenyläthyldiäthoxysilan
h) 7,5 Gewichtsteile silanisiertes Polybutadienöl siehe Merkblatt Polyvest® 3324 "Polymerer Si-Füll-stoffaktivator für Kautschukmischungen" (Polyvest® 25 der Firma Chem. Werke Hüls in Marl)
i) 6,9 Gewichtsteile 3-Azidopropyltriethoxysilan
j) 7,35 Gewichtsteile Thiocyanatopropyltriethoxysilan

Aus den jeweiligen Gemischen wurden als Rechteckprofile ausgeführte Formkörper der Größe 0,3 x 1,7 cm in beliebiger Länge mittels eines Extruders hergestellt.

Auf gleiche Weise wurden auch Vergleichsprofile aus der Grundmischung hergestellt die Füllstoff und kein Organosilan enthielt (V2). Auf die Füllstoff-freie Grundmischung (V1), ließ sich diese Verfahrensweise nicht anwenden. Hier mußte zur Erzielung glatter Oberflächen, der thermoplastische Kautschuk unter Anwendung einer Metallform in einer Presse zu einer Platte mit 2 planparallelen Flächen verformt werden.

An den Proben (Formkörpern) wurden folgende Eigenschaften geprüft bzw. gemessen:

1. Die Zugfestigkeit (ZF) in MPa gemäß DIN (53504)
2. Der Spannungswert bei 300 % Dehnung (Modul, mit "M 300" abgekürzt, gemäß DIN (53504)
3. Die Shore-A-Härte (SH) gemäß DIN (53505)
4. Die Quellung der Formkörper (Q), d.h. die Volumenzunahme in Volumenprozent nach 28-tägiger Lagerung in destilliertem Wasser.

Ferner wurden die jeweiligen Gemische der Rheometerprüfung (Probekörper 30'/155°C vorgewarmt) gemäß der Vornorm vom Oktober 1972 DIN 53529 unterzogen und dabei die minimalen Drehmomente ($D_{min}$) in Nm und ferner die Mooney-Plastizität bzw. Viskosität (ML4) (Probekörper 30'/150°C vorgewarmt) in Mooney-Ein eiten gemäß DIN 53523 und 53524 bestimmt und zwar bei 150°C mit dem Normalrotors (L) und einer Prüfdauer von 4 Minuten gemessen. Die gemessenen Werte waren die folgenden:

**Tabelle I**

| | | Vergleichsmischungen | |
|---|---|---|---|
| | | V1 | V2 |
| 1. | Zugfestigkeit MPa | 7,5 | 11,0 |
| 2. | Modul 300 | 1,4 | 3,8 |
| 3. | Shore-A-Härte | 43 | 76 |
| 4. | Quellung Vol % | 1,71 | 6,72 |
| 5. | Rheometer $D_{min}$ Nm | 0,29 | 1,29 |
| 6. | Mooney ML4 | 12 | 101 |

V1: ohne Kieselsäure
V2: mit Kieselsäure

**Tabelle I (Fortsetzung)**

| | Probenkörper | a) | b) | c) | d) | e) | f) | g) | h) | i) | j) |
|---|---|---|---|---|---|---|---|---|---|---|---|
| 1. | Zugfestigkeit Mpa | 7,9 | 8,1 | 8,5 | 8,4 | 7,5 | 9,2 | 8,0 | 8,2 | 8,6 | 8,3 |
| 2. | Modul 300 | 3,1 | 3,2 | 2,9 | 3,7 | 3,4 | 4,1 | 3,7 | 3,3 | 5,8 | 4,0 |
| 3. | Shore-A-Härte | 72 | 71 | 67 | 66 | 75 | 72 | 72 | 75 | 68 | 72 |
| 4. | Quellung Vol % | 1,52 | 1,47 | 2,53 | 1,74 | 1,80 | 1,40 | 1,44 | 2,69 | 2,10 | 2,47 |
| 5. | Rheometer $D_{min}$ Nm | 0,86 | 0,85 | 0,80 | 0,71 | 0,79 | 0,93 | 0,75 | 1,25 | 1,48 | 0,77 |
| 6. | Mooney ML4 | 38 | 40 | 48 | 45 | 44 | 86 | 42 | 60 | | 51 |

Wie aus Tabelle I hervorgeht, werden durch den Zusatz von Kieselsäure zu thermoplastischem Kautschuk die Meßwerte für den Modul 300 die Shore-A-Härte und die Zugfestigkeit deutlich erhöht (Probenkörper V1 und V2) und damit der Gebrauchswert in dieser Weise hergestellter Gegenstände erhöht.

Gleichzeitig muß aber festgestellt werden, daß die Meßwerte für die Quellung, Rheometer $D_{min}$ und Mooney-Viskosität ML4 bei dem Kieselsäure-haltigen Probekörper V2 ansteigen. Dies ist als nachteilig zu bewerten.

Die Meßwerte, die an Silan-haltigen Probenkörpern gefunden werden, zeigen aber wie unter Erhaltung der durch den Kieselsäurezusatz erzielten Verbesserung z. B. bei der Shore-A-Härte und dem Modul 300, die gleichzeitig aufgetretene wesentliche Verschlechterung insbesondere z. B. des Quellungswerts durch den Zusatz von Organosilanen zur Mischung rückgängig gemacht werden kann.

**Patentansprüche**

1. Elastische Formmasse bestehend aus einem thermoplastischen Kautschuk oder einem Gemisch solcher Kautschuke, gegebenenfalls im Gemisch mit einem thermoplastischen Kunststoff und/oder einem synthetischen Harz, ferner mindestens einem silikatischen Füllstoff in Mengen von 1-300 Gewichtsteilen und mindestens einem Stabilisierungsmittel aus der Gruppe der Alterungs-, Ermüdungs-, Oxidations-, Ozon- und Lichtschutzmittel in üblichen Mengen, dadurch gekennzeichnet, daß die Formmasse mindestens eine Organosiliciumverbindung, welche mindestens eine Alkoxysilylgruppe aufweist, in Mengen von 0,1 - 25

Gewichtsteilen enthält, wobei alle genannten Gewichtsteilen bezogen sind auf 100 Gewichtsteile thermoplastischen Kautschuk, oder daß die Formmasse die genannte Organosiliciumverbindung bzw. die genannten Organosiliciumverbindungen als Vorgemisch mit dem silikatischen Füllstoff enthält, oder daß die Formmasse die genannte Organosiliciumverbindung bzw. die genannten Organosiliciumverbindungen in mit dem silikatischen Füllstoff chemisch gebundener Form in gleichmäßiger Verteilung enthält.

2. Elastische Formmasse nach Anspruch 1, dadurch gekennzeichnet, daß sie als Organosiliciumverbindungen mindestens ein Organosilan der Formeln

(I) $X_p$-$C_mH_{2m+1-p}$-$SiR_n^1(OR)_{3-n}$,

in der bedeuten X Chlor oder Brom, p = 1 oder 2, m = 1 bis 5, $R^1$ eine $C_1$- bis $C_5$-Alkylgruppe, eine $C_5$- bis $C_6$-Cycloalkylgruppe oder die Phenylgruppe, R eine $C_1$- bis $C_5$-Alkylgruppe, eine $C_5$- bis $C_6$-Cycloalkylgruppe, die Methoxyäthylgruppe, die Äthoxyäthylgruppe, Phenylgruppe oder die Benzylgruppe und n = 0;1 oder 2, einschließlich eines Hydrolysats und/oder eines Kondensats,

(II) $[R_n^2(R^3O)_{3-n}Si$-$(Alk)_q(Ar)_r$-$]_2S_X$ oder

(III) $R_n^2(R^3O)_{3-n}Si$ Alk-SH,

in denen bedeuten Ar einen Arylenrest mit 6 bis 12 Atomen, r=0 oder 1, $R^2$ eine $C_1$-bis $C_5$-Alkylgruppe, die Phenylgruppe, $R^3$ eine $C_1$- bis $C_5$-Alkylgruppe, die Methoxyäthylgruppe, die Athoxyäthylgruppe, Phenylgruppe oder die Benzylgruppe, n = 0, 1 oder 2, Alk einen zweiwertigen, geraden oder verzweigten Kohlenwasserstoffrest mit 1 bis 6 Kohlenstoffatomen und x eine Zahl von 2,0 bis 8,0 einschließlich ihrer Hydrolysate und/oder ihrer Kondensate q=0 oder 1 und als silikatische Füllstoffe mindestens einen durch Fällung aus wässrigen Medium genommenen Füllstoff, der im wesentlichen aus Kieselsäure mit spezifischen Oberflächen, nach DIN 66132 gemessen, zwischen 30 und 250 $m^2/g$ besteht, oder daß sie ein Gemisch aus bzw. ein chemisches Umsetzungsprodukt mit mindestens einem der genannten Kieselsäure-Füllstoffe oder Ruß enthält.

3. Elastische Formmasse nach Anspruch 1, dadurch gekennzeichnet, daß sie als Organosiliciumverbindungen mindestens ein Organosilan der Formel:

(IV) A-$SiR_n^4(OR^3)_{3-n}$,

in der bedeuten $R^4$ eine $C_1$- bis $C_5$-Alkylgruppe, $R^3$ eine $C_1$- bis $C_5$-Alkylgruppe, die Methoxyäthyl-, die Athoxyäthylgruppe, die Phenyl- oder die Benzylgruppe, n = 0; 1 oder 2,

A eine Azido-, Thiocyanato- Amino- oder Epoxyalkylgruppe, wobei der Alkylrest ein gerader oder verzweigter Kohlenwasserstoffrest mit 1 bis 6 Kohlenstoffatomen ist, oder eine Vinylgruppe oder ein Aralkylrest, oder als Organosilan Phenyläthyldiathoxysilan enthält.

4. Verfahren zum Herstellen und Verformen der elastischen Formmasse nach den Ansprüchen 1 bis 3, dadurch gekennzeichnet, daß man zweistufig arbeitet und zunächst in einem schnell laufenden Innenmischer in einer Zeit von 2 bis 30 Minuten bei einer Tourenzahl von 20 bis 120 pro Minute und einer anfänglichen Temperatur von 90 bis 110°C den thermoplastischen Kautschuk mit dem silikatischen Füllstoff (in einer oder mehreren gleichen Positionen nacheinander) dem Organosilan und dem gegebenenfalls miteingesetzten stabilisierungsmittel, mischt und die Masse auf Mischwalzen bei einer Anfangstemperatur (der Walzen) von 90 bis 110°C innerhalb einer Zeit von 1 bis 10 Minuten zu einem gleichmäßigen Walzfell verarbeitet, währenddessen das Walzfell drei- bis fünfmal (mit einem Messer) ein- oder durchgeschnitten (und gestürzt) wird, und daß schließlich gegebenenfalls nach Abkühlung, das Walzfell mit einer Dicke von 2 bis 20 mm der Mischwalzenvorrichtung entnommen, gegebenenfalls zu Granulaten oder dergleichen übliche Formstücke zerkleinert und diese bei Temperaturen zwischen 60 und 300°C mit Hilfe üblicher Vorrichtungen zu Formkörpern verarbeitet wird.

5. Verfahren zum Herstellen und Verformen der elastischen Formmasse nach den Ansprüchen 1 bis 4, dadurch gekennzeichnet, daß man zunächst in einem schnell laufenden Innienmischer in einer Zeit von 2 bis 30 Minuten bei einer Tourenzahl von 20 bis 120 pro Minute und einer anfänglichen Temperatur von 90 bis 110°C den thermoplastischen Kautschuk mit dem synthetischen Harz vermischt, zu diesem Gemisch den silikatischen Füllstoff und das Organosilan gibt, anschließend den Alterungs- und UV-Schutz hinzufügt und die entstehende Masse auf Mischwalzen weiterverarbeitet.

6. Verwendung der elastischen Formmasse nach den Ansprüchen 1 bis 5 zur Herstellung von Schuhsohlen, Sohlenplatten, Absätzen, Absatzplatten oder anderen Formkörpern sowie extrudierten Fäden, Schnüren, Bändern, Profilen, Schläuchen oder Platten.

**Claims**

1. An elastic moulding composition consisting of a thermoplastic rubber or a mixture of such rubbers, optionally in admixture with a thermoplastic plastic and/or a synthetic resin; at least one silicate filler in quantities of 1 to 300 parts by weight and at least one stabilizer from the group comprising antiagers, anti-fatigue agents, antioxidants, anti-ozonants and light stabilizers in the usual quantities, characterized in that the moulding composition contains at least one organosilicon compound containing at least one alkoxysilyl group in quantities of 0.1 to 25 parts by weight, all parts by weight being based on 100 parts by weight thermoplastic rubber, or in that the moulding composition contains the organosilicon compound(s) mentioned in the form of a premix with the silicate filler, or in that the moulding composition contains the organosilicon compound(s) mentioned in chemical combination with the silicate filler in uniform distribution.

2. An elastic moulding composition as claimed in Claim 1, characterized in that it contains as organosilicon compounds at least one organosilane corresponding to the formulae

(I) $X_p\text{-}C_mH_{2m+1-p}\text{-}SiR_n^1(OR)_{3-n}$,

in which X represents chlorine or bromine, p = 1 or 2, m = 1 to 5, $R^1$ is a $C_1$-$C_5$ alkyl group, a $C_5$-$C_6$ cycloalkyl group or the phenyl group, R is a $C_1$-$C_5$ alkyl group, a $C_5$-$C_6$ cycloalkyl group, the methoxyethyl group, the ethoxyethyl group, phenyl group or the benzyl group and n = 0, 1 or 2, including a hydrolyzate or a condensate,

(II) $[R_n^2(R^3O)_{3-n}Si\text{-}(Alk)_q(Ar)_r\text{-}]_2S_X$ or

(III) $R^2(R^3O)_{3-n}Si\text{-}Alk\text{-}SH$,

in which Ar is a $C_6$-$C_{12}$ arylene radical, r = 0 or 1, $R^2$ is a $C_1$-$C_5$ alkyl group, the phenyl group, $R^3$ is a $C_1$-$C_5$ alkyl group, the methoxyethyl group, the ethoxyethyl group, phenyl group or the, benzyl group, n = 0, 1 or 2, Alk is a difunctional, linear or branched $C_1$-$C_6$ hydrocarbon radical and x is a number of 2.0 to 8.0, including hydrolyzates and/or condensates thereof, q = 0 or 1, and as silicate fillers at least one filler obtained by precipitation from aqueous medium and consisting essentially of silica having a specific surface according to DIN 66 132 of 30 to 250 $m^2/g$, or in that it contains a mixture of or a chemical reaction product with at least one of the silica fillers mentioned or carbon black.

3. An elastic moulding composition as claimed in Claim 1, characterized in that it contains as organosilicon compounds at least one organosiliane corresponding to the formula:

(IV) $A\text{-}SiR_n^4(OR^3)_{3-n}$,

in which $R^4$ is a $C_1$-$C_5$ alkyl group, $R^3$ is a $C_1$-$C_5$ alkyl group, the methoxyethyl group, the ethoxyethyl group, the phenyl or the benzyl group, n = 0, 1 or 2, A is an azido, thiocyanato, amino or epoxyalkyl group, the alkyl radical being a linear or branched $C_1$-$C_6$ hydrocarbon radical or a vinyl group or an aralkyl radical or, as organosilane, phenyl ethyl diethoxy silane.

4. A process for the production and moulding of the elastic moulding composition claimed in Claims 1 to 3, characterized in that, in a two-step procedure, the thermoplastic rubber is mixed with the silicate filler (at one or more identical successive stations) and the organosilane and the stabilizer used, if any, over a period of 2 to 30 minutes in a high-speed internal mixer at a rotational speed of 20 to 120 r.p.m. and at an initial temperature of 90 to 110°C after which the mixture is processed on mixing rolls for 1 to 10 minutes at an initial temperature (of the rolls) of 90 to 110°C to form a uniform rolled sheet which, in the meantime, is cut or sliced (and turned) three to five times and, finally, the 2 to 20 mm thick sheet, optionally after cooling, is removed from the mixing rolls, optionally size-reduced to granulate or similar standard particles which are processed into mouldings in standard machines at temperatures of from 60 to 300°C.

5. A process for the production and moulding of the elastic moulding composition claimed in Claims 1 to 4, characterized in that the thermoplastic rubber is first mixed with the synthetic resin in a high-speed internal mixer over a period of 2 to 30 minutes at a rotational speed of 20 to 120 r.p.m. and at an initial temperature of 90 to 110°C, the silicate filler and the organosilane are then added to the resulting mixture, the anti-ager and the UV stabilizer are then added and the mass formed is further processed on mixing rolls.

6. The use of the elastic moulding composition claimed in Claims 1 to 5 for the production of shoe soles, sole plates, heels, heel plates or other mouldings and extruded strings, laces, ribbons , profiles, hoses or sheets.

**Revendications**

1. Matière à mouler élastique constituée d'un caoutchouc thermoplastique ou d'un mélange de tels caoutchoucs, éventuellement en mélange avec une matière synthétique thermoplastique et/ou une résine

synthétique, en outre d'au moins une charge siliceuse en quantités de 1-300 parties en poids et d'au moins un stabilisant appartenant à la catégorie des agents de protection contre le vieillissement, la fatigue, l'oxydation, l'ozone et la lumière, en qantités usuelles, caractérisée en ce que la matière moulée contient au moins un composé organosilicié, comportant au moins un groupe alcoxysilyle, en quantités de 0,1 - 25 parties en poids, toutes lesdites parties en poids étant données par rapport à 100 parties en poids de caoutchouc thermoplastique, ou en ce que la matière moulée contient ledit composé organosilicié ou lesdits composés organosiliciés sous forme de mélange préliminaire avec la charge siliceuse, ou en ce que la matière moulée contient en distribution homogène ledit composé organosilicié ou lesdits composés organosiliciés sous forme liée chimiquement avec la charge siliceuse.

2. Matière à mouler selon la revendication caractérisée en ce qu'elle contient en tant que composés organosiliciés au moins un organosilane de formules:

(I) $X_p\text{-}C_mH_{2m+1\text{-}p}\text{-}SiR_n^1(OR)_{3\text{-}n}$,

dans laquelle X représente le chlore ou le brome, p = 1 ou 2, n = 1 à 5, $R^1$ représente un groupe alkyle en $C_1$-$C_5$ un groupe cycloalkyle en $C_5$-$C_6$ ou le groupe phényle ; R représente un groupe alkyle en $C_1$-$C_5$, un groupe cycloalkyle en $C_5$-$C_6$, le groupe méthoxyéthyle, le groupe éthoxyéthyle, le groupe phényle ou le groupe benzyle et n = 0, 1 ou 2, y compris un hydrolysat et/ou un condensat,

(II) $[R_n^2(R^3O)_{3\text{-}n}Si\text{-}(alk)_q(Ar)_r]_2S_X$ ou

(III) $R_n^2(R^3O)_{3\text{-}n}Si\text{-}Alk\text{-}SH$,

dans lesquelles R représente un radical arylène ayant de 6 à 12 atomes de carbone, r - 0 ou 1, $R^2$ représente un groupe alkyle en $C_1$-$C_5$, le groupe phényle, $R^3$ représente un groupe alkyle en $C_1$-$C_5$, le groupe méthoxyéthyle, le groupe éthoxyéthyle, le groupe phényle ou le groupe benzyle, n = 0, 1 ou 2, Alk représente un reste hydrocarboné bivalent, à chaîne droite ou ramifiée, ayant de 1 à 6 atomes de carbone; et X représente un nombre valant de 2,0 à 8,0, y compris leurs hydrolysats et/ou leurs condensats; q = 0 ou 1, et en tant que charges siliceuses, au moins une charge, obtenue par précipitation hors d'un milieu aqueux, qui est essentiellement constituée d'acide silicique à surfaces spécifiques, mesurées selon DIN 66132, comprises entre 30 et 250 $m^2/g$, ou en ce qu'elle contient un mélange ou un produit de réaction chimique avec au moins une desdites charges de type acide silicique ou du noir de fumée.

3. Matière à mouler élastique selon la revendication 1, caractérisée en ce qu'elle contient en tant que composés organosiliciés au moins un organosilane de formule:

(IV) $A\text{-}SiR_n^4(OR^3)_{3\text{-}n}$,

dans laquelle $R^4$ représente un groupe alkyle en $C_1$-$C_5$, $R^3$ représente un groupe alkyle en $C_1$-$C_5$, le groupe méthoxyéthyle, le groupe éthoxyéthyle, le groupe phényle ou le groupe benzyle; n = 0, 1 ou 2, A représente un groupe azido, thiocyanato-, amino-ou époxyalkyle, le reste alkyle étant un reste hydrocarboné à chaîne droite ou ramifiée ayant de 1 à 6 atomes de carbone, ou un groupe vinyle ou un reste aralkyle, ou en tant qu'organosilane, le phényléthyldiéthoxysilane.

4. Procédé pour la préparation et le moulage de la matière à mouler élastique selon l'une quelconque des revendications 1 à 3, caractérisé en ce que l'on opère en deux étapes et, en premier lieu, on mélange le caoutchouc thermoplastique avec la charge siliceuse (en une ou plusieurs positions identiques successives), l'organosilane et le stabilisant éventuellement utilisé simultanément, dans un mélangeur interne à grande vitesse, pendant 2 à 30 minutes, à une vitesse de 20 à 120 tours par minute, et à une température initiale de 90 à 110° C, puis on transforme la masse en un mélange en plaque uniforme sur des cylindres malaxeurs en l'espace de 1 à 10 minutes, à une température initiale (des cylindres) de 90 à 110° C, le mélange en plaque étant pendant ce temps entaillé ou découpé (et retourné) trois à cinq fois (avec une lame), et en ce que, éventuellement après refroidissement, le mélange en plaque, ayant une épaisseur de 2 à 20 mm, est finalement enlevé du dispositif à cylindres malaxeurs, éventuellement fragmenté en granulés ou éléments à mouler usuels similaires, puis transforme en corps moulés à des températures comprises entre 60 et 300° C, à l'aide des dispositifs usuels.

5. Procédé pour la préparation et le moulage de la matière à mouler élastique selon l'une quelconque des revendications 1 à 4, caractérisé en ce qu'en premier lieu on mélange dans un mélangeur interne à grande vitesse, pendant une durée de 2 à 30 minutes à une vitesse de 20 à 120 tours par minute et à une température initiale de 90 à 110° C, le caoutchouc thermoplastique et la résine synthétique, on ajoute à ce mélange la charge siliceuse et l'organosilane, on ajoute ensuite l'agent de protection contre le vieillissement et contre les rayons UV et on poursuit le traitement de la matière résultante sur des cylindres malaxeurs.

6. Utilisation de la matière à mouler élastique selon l'une quelconque des revendications 1 à 5 pour la fabrication de semelles de chaussures, plaques de semelles, talons, plaques de talons ou autres corps moulés, ainsi que de fils, baguettes, bandes, profilés, plaques et boyaux extrudés.